Europäisches Patentamt

European Patent Office

Office européen des brevets

(11) Publication number: **0 281 167 B1**

## EUROPEAN PATENT SPECIFICATION

(45) Date of publication of patent specification: **22.04.92**  (51) Int. Cl.5: **A23C 19/032**, A23C 19/14

(21) Application number: **88200119.1**

(22) Date of filing: **25.01.88**

(54) A process for the manufacture of cheese of the gouda type.

(30) Priority: **26.01.87 NL 8700176**

(43) Date of publication of application:
**07.09.88 Bulletin 88/36**

(45) Publication of the grant of the patent:
**22.04.92 Bulletin 92/17**

(84) Designated Contracting States:
**BE DE FR GB IT NL**

(56) References cited:
**EP-A- 0 150 743**

**JOURNAL OF DAIRY SCIENCE, vol. 68, suppl. 1, 1985, pages 69-70, article no. D47; H.J. BARTELS et al.: "Accelerated ripening of Gouda cheese. 1. Effect and evaluation of thermophilic lactobacilli and streptococci on proteolysis and flavor development"**

**JOURNAL OF DAIRY SCIENCE, vol. 68, suppl. 1, 1985, page 70, article no. D48; H.J. BARTELS et al.: "Accelerated ripening of Gouda cheese. 2. Effect of freeze treated Lactobacillus helveticus on proteolysis and flavor development"**

(73) Proprietor: **BCZ Friesland B.V.
Baljeestraat 12
NL-8911 AK Leeuwarden(NL)**

(72) Inventor: **Hup, Gerhard
Groningenstraatweg 192
NL-8922 GE Leeuwarden(NL)**
Inventor: **Wilbrink, Albert
Tylkedam,147
Leeuwarden(NL)**

(74) Representative: **Smulders, Theodorus A.H.J., Ir. et al
Vereenigde Octrooibureaux Nieuwe Parklaan 97
NL-2587 BN 's-Gravenhage(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

NETH. MILK AND DAIRY J., vol. 31, no. 3, 1977, pages 177-187; G. KLETER: "The ripening of Gouda cheese made under strictly aseptic conditions. 2. The comparison of the activity of different starters and the influence of certain lactobacillus strains"

AUSTRALIAN JOURNAL OF DAIRY TECHNOLOGY, vol. 37, no. 3, September 1982, pages 118-120, Parkville, Victoria, AU; V.L. BARRAOUIO et al.: "Fynbo cheese: III. Accelerated ripening using a higher level of starter"

J.G. DAVIS: "Cheese", vol. III, pages 816-817, Churchill Livingstone, New York, US

**Description**

This invention relates to a process for the manufacture of cheese of the Gouda type, which comprises converting cheesemilk to a whey/curd mixture using a culture of lactic acid bacteria and then converting the curd to cheese.

According to the Dutch Agricultural Quality Decree on Cheese Products Gouda cheese is defined by its appearance, sizes, composition and nature of the dairy product. Such a cheese is generally prepared using a mesophilic culture of lactic acid streptococci.

Together with rennet and $CaCl_2$, mesophilic bacteria are added to cheesemilk of 30-32°C in the form of a starter culture. After coagulation (about 25 minutes) the curd is cut, the first whey is removed and curd wash water is added with a temperature bringing the mixture to a reheating temperature of 33-36°C. After removal of the second whey the curd is shaped into curd cubes, pressed and subjected to a brine treatment. Subsequently, the cheese is stored in a cheese warehouse at an average temperature of 14°C for the purpose of carrying out the ripening process. In order to obtain very old Gouda cheese a ripening period of 15-20 months is required.

According to this invention a culture containing chiefly or exclusively rodlike thermophilic lactic acid bacteria is used in addition to a culture of mesophilic lactic acid bacteria, the temperature of the whey/curd mass is adjusted to a value of 36-38°C after removal of the first whey, and the resulting cheese is first ripened at a temperature of 13-15°C for a period of 7-21 days, after which the cheese is further ripened at a temperature of 18-20°C for a period of 5-10 months, until visible crystals have been formed in the cheese. The thus obtained cheese has the same characteristics as very old Gouda cheese. The culture of thermophilic lactic acid bacteria to be used in the process according to this invention has an optimum temperature ranging from 40 to 45°C.

It is observed that the combination of mesophilic and thermophilic bacterial cultures is known per se, e.g., in the manufacture of so-called Fynbo cheese. Thus, The Australian Journal of Dairy Technology 39 (1984) No. 2, page 86 ff. discloses a research into the effects of different methods of cheesemilk acidification, varying pressures and ripening periods on the chemical quality of cheese, in particular on its eye formation. The cheese used for the research was made using a culture of S.diacetilactis and L.helveticus. The cheeses thus made were ripened for two months at a temperature of 13-15°C. Unintentionally and unexpectedly, this ripening temperature was followed after two months by a temperature of 20°C. Although the period of time for which the cheeses ripened further at this temperature is not specified in the above publication, this may have taken place, in view of the context, for a period not exceeding one month. The insight that using the culture combination and particular ripening as those of the present invention a cheese having the same characteristics as so-called aged Gouda cheese is obtained after 6-10 months cannot be derived from the above publication.

It is further observed that in Journal of Dairy Science Vol. 68 Suppl. 1 1985 (D 47) the effect of thermophilic lactobacilli and streptococci on the accelerated ripening of Gouda cheese is studied. However, the cultures used therein are subjected to a heat treatment so that they are deactivated.

It is surprising that at a higher ripening temperature the cheese made using the process according to this invention shows a considerably accelerated ripening without resulting in deviating flavours. In this connection it is advisable to select a proper combination of mesophilic and thermophilic starters, which can be simply determined by way of experiment.

An accelerated ripening represents an important economic advantage, because this admits of considerably reducing the cost involved in cheese storage. In the process now claimed it is possible to manufacture Gouda cheese which at the age of 5-10 months already shows the characteristics of 10-20 months old cheese. At 6-9 months such cheese already contains crystals, a phenomenon occurring with highly aged cheese. The quality of cheese thus made is comparable to that of more than 12 months old cheese as regards both flavour and consistency.

In practice, it proves to be important that the relatively high ripening temperature of 18-20°C is not adjusted until after the cheese has ripened at least for a period of 7 days at the usual temperature of 13-15°C. This period is intended especially to effect a uniform salt and moisture distribution which is essential to a steady ripening of the cheese. Then the temperature may be increased.

Because not all cheeses are consumed directly after the formation of visible crystals therein, it is in some cases desired, in view of obtaining optimal results, to delay further ripening after said crystal formation. For this purpose the cheeses are stored for a certain time period (e.g. 2-3 months), in particular at a temperature of 12-14°C.

The invention will now be explained by means of the following examples.

3

EXAMPLE I

800 l of cheesemilk was bactofugated and pasteurized in the conventional manner. Per 100 l of cheesemilk, 5 g of NaNO₃ was added. The reheating temperature was 37C. The starter used was 0.5% of well known mesophilic mixed culture of the BD type and 0.5% of a culture containing essentially thermophilic rodlike lactic acid bacteria. The manufacture took place in the conventional manner, as usual for stored cheese. There were obtained 7 Gouda cheeses of each 12 kg, which were brined for 7 days. The moisture content of the cheese was about 40% at 2 weeks and the salt content in the solid matter 3.5%. After a one-week preripening at 14°C the cheeses were stored at 20°C. At the age of 6 months the cheeses were evaluated and analyzed. Flavour was judged "good", as well as consistency. Some crystals were already visible. The moisture content of the cheese was then 30%, and tie acidity of the fat was 2.58 mgeq OH$^{(-)}$/100 g of fat. A comparable normally ripened cheese had a moisture content of 33.9% and a fat acidity of 1.33. The nitrogen distribution in % in the cheese was as follows:

|  | Total N | Amino acid N | Soluble N | Non-coagulable N |
|---|---|---|---|---|
| Trial | 4.42 | 0.63 | 1.55 | 1.50 |
| Normally made | 4.17 | 0.23 | 1.08 | 1.02 |

Thus, the accelerated ripening was also shown chemically.

At the age of 10 months this cheese was once more subjected to an organoleptic evaluation in which a good flavour and consistency were found, while many white crystals were present in the dairy product.

EXAMPLE II

As example I. The starter added was 0.6% of a well known mesophilic mixed culture and 0.5% of a thermophilic mixed culture consisting of rodlike lactic acid bacteria. After a preripening period of 2 weeks at 14°C, the cheese produced was stored for ripening purposes at 20°C. On evaluation at the age of 6 months, the cheese was judged good by a panel of experts as to flavour, appearance in cross-section and consistency. Some crystals were already noticeable and visible.

Two cheeses were then stored at about 14°C. On evaluation at 10 months an excellent cheese having sufficient crystals was found. Two other cheeses were also stored the last 4 months at 20°C. The flavour of this cheese was still good, many crystals were present, but the consistency was designated as crumbly.

**Claims**

1. A process for the manufacture of cheese of the Gouda type, which comprises converting cheesemilk to a whey/curd mixture using a culture of lactic acid bacteria and then converting the curd to cheese, characterized in that a culture containing chiefly or exclusively rodlike thermophilic lactic acid bacteria is used in addition to a culture of mesophilic lactic acid bacteria, that the temperature of the whey/curd mass is adjusted to a value of 36-38°C after removal of the first whey, and that the resulting cheese is first ripened at a temperature of 13-15°C for a period of 7-21 days, after which the cheese is further ripened at a temperature of 18-20°C for a period of 5-10 months, until visible crystals have been formed in the cheese.

2. A process according to claim 1, wherein after ripening for 5-10 months the cheese is further ripened at 12-14°C for 2-3 months.

**Revendications**

1. Procédé de fabrication du fromage du type Gouda, comprenant la transformation du lait pour fromage en un mélange caillé/lactosérum en utilisant une culture de bactéries d'acide lactique, puis la transformation du caillé en fromage,
caractérisé en ce qu'une culture contenant, principalement ou exclusivement, des bactéries d'acide lactique thermophiles en forme de bâtonnet est utilisée en plus d'une culture de bactéries d'acide lactique mésophiles, en ce que la température de la masse caillé/lactosérum est réglée à une valeur de 36-38°C après retrait du premier lactosérum, et en ce que le fromage résultant est tout d'abord affiné à une température de 13-15°C pendant une période de 7-21 jours, après quoi le fromage est encore affiné à une température de 18-20°C pendant une période de 5-10 mois, jusqu'à ce que des cristaux visibles soient formés dans le fromage.

**2.** Procédé selon la revendication 1, dans lequel, après affinage pendant 5-10 mois, le fromage est encore affiné à 12-14°C pendant 2-3 mois.

**Patentansprüche**

**1.** Verfahren zur Herstellung von Käse vom Typ Gouda, wobei Käsereimilch in ein Gemisch von Molke/Bruch unter Verwendung einer Kultur von Milchsäurebakterien und dann der Bruch in Käse umgewandelt wird, dadurch gekennzeichnet, daß eine Kultur, die hauptsächlich oder ausschließlich stabähnliche thermophile Milchsäurebakterien enthält, zusätzlich zu einer Kultur von mesophilen Milchsäurebakterien verwendet wird, daß die Temperatur der Masse aus Molke/Bruch auf einen Wert von 36 - 38°C nach Entfernen der ersten Molke eingestellt wird, und daß man den sich ergebenden Käse zuerst bei einer Temperatur von 13 - 15°C für einen Zeitraum von 7 - 21 Tagen reifen läßt, wonach man den Käse weiter bei einer Temperatur von 18 - 20°C für einen Zeitraum von 5 - 10 Monaten reifen läßt bis sich sichtbare Kristalle in dem Käse gebildet haben.

**2.** Verfahren nach Anspruch 1, wobei man nach der Reifung für 5 - 10 Monate den Käse weiter bei 12 - 14°C für 2 - 3 Monate reifen läßt.